# EUROPEAN PATENT APPLICATION

(11) **EP 2 100 862 A2**
(43) Date of publication of application: **16.09.2009**
(21) Application number: 08173124.2
(22) Date of filing: 30.12.2008
(51) Int. Cl.: C04B 28/36

(54) **A method for producing sulphuric binding agent, a sulphuric binding agent, sulphur concrete and a method for producing sulphur concrete and application of liquid product of polystyrene pyrolysis**

(30) Priority: 31.12.2007 PL 38419807
(71) Applicant: Wapeco Sp. z o.o, 04-088 Warszawa (PL); Vegalo Limited, 1060 Nicosia (CY); Kmiotek, Bartlomiej, 42-525 Bledow (PL)
(72) Inventor: KMIOTEK, Bartlomiej, 42-525 Bledow (PL); Cwiakala, Micha., 57-402 Nowa Ruda (PL)
(74) Representative: Kaminski, Piotr

(57) **Abstract**

Object of the invention is a method of preparation of sulphuric binding agent based on sulphur and olefin hydrocarbons is characterised in that sulphur at the amount from 70 wt% to 96 wt% is heated under an inert gas atmosphere, and is fed with the olefin hydrocarbons at the amount from 4 wt% to 30 wt%, and then the reaction mixture is gradually heated to a temperature not higher than 150°C and maintained at such temperature for 3 to 4 hours under constant mixing, the olefin hydrocarbons including a liquid product derived from polystyrene pyrolysis PPS, which is added at a weight ratio of at least 1:1 referred to the remaining olefin hydrocarbons. Object of the invention is also the sulphuric binding agent and the sulphur concrete as well as the methods of its preparation.

## Description

Object of the invention is a method of preparation of sulphuric binding agent, a sulphuric binding agent, sulphur concrete and a method for producing sulphur concrete and application of a liquid product derived from polystyrene pyrolysis.

The sulphuric binding agent, otherwise referred to as modified sulphur or sulphur polymer is used for production of the sulphur concrete as a binder (acement).

Methods of preparation of sulphuric binding agent with use of sulphur and various known unsaturated hydrocarbons, which function as a modifier and impart to sulphur plasticity through inhibiting its crystallisation process, and which stabilise its polymeric structure, are known. Up to now, mixtures of olefin hydrocarbons, such as styrene, dicyclopentadiene, cyclopentadiene, dipentene, vinylcyclohexane and other, are known. From Austrian patent AT 355976 and US Patent 4,058,500 sulphuric binders containing sulphur and the above-mentioned modifiers are known. The use of modifiers of that type while employing a temperature regime during process results in a homogeneous copolymer substance sometimes referred to as "polysulphur", which is characterised by excellent binding properties in compositions with mineral aggregates, which ranks it very high among widely used binding agents. Object of the invention is a method of preparation of sulphuric binding agent based on sulphur and olefin hydrocarbons, characterised in that sulphur at the amount of 70 wt%-96 wt% is heated under an inert gas atmosphere and is fed with olefin hydrocarbons at the amount of 4 wt%-30 wt%, and then the reaction mixture is stepwise heated to a temperature not higher than 150°C and maintained at such temperature for 3-4 hours while mixing continuously, and olefin hydrocarbons contain a liquid product derived from pyrolysis of polystyrene PPS, which is added at the weight ratio of at least 1:1 referred to the remaining olefin hydrocarbons.

Preferably, the liquid product derived from pyrolysis of polystyrene PPS is added at the weight ratio of 2:1 in relation to the remaining olefin hydrocarbons.

Preferably, the amount of sulphur in the mixture is from 70 wt% to 93 wt%.

Preferably, the amount of sulphur in the mixture is from 80 wt% to 93 wt%.

Preferably, the total amount of olefin hydrocarbons added is from 7 wt% to 30 wt%.

Preferably, the total amount of olefin hydrocarbons added is from 7 wt% to 20 wt%.

Preferably, while feeding with olefin hydrocarbons temperature is maintained within the limits of 120°C-130°C.

Preferably, feeding with olefin hydrocarbons takes place during a period not less than 30 minutes.

Preferably, the added olefin hydrocarbons contain the liquid product derived from pyrolysis of polystyrene PPS at the weight ratio of 3:1 referred to the remaining olefin hydrocarbons.

Object of the invention is also sulphuric binding agent characterised in that it is obtained by the method defined above.

Object of the invention is also the sulphur concrete characterised in that it includes the sulphuric binding agent defined above.

Preferably, the amount of the sulphuric binding agent included therein is from 10 wt% to 35 wt%.

Preferably, the sulphur concrete additionally includes activated fly ash derived from coal combustion in power boilers, as a filler.

Object of the invention is also a method of preparation of the sulphur concrete characterised in that the sulphuric binding agent described above is combined with a mineral aggregate and filler and duration of mixing of these components is from 5 to 180 seconds.

Object of the invention is also the use of the liquid product derived from pyrolysis of polystyrene PPS for preparation of the sulphuric binding agent and the sulphur concrete.

According to the invention, the method of preparation of polysulphur that constitutes a binding agent in sulphur concretes or protecting coatings of conventional commercial concretes is such that it is obtained from elemental sulphur and compositions of olefin hydrocarbons acting as modifiers. The method is characterised in that 4 wt% -30 wt% are constituted by a mixture of olefin hydrocarbons, and also by the liquid substance obtained by the pyrolysis process (thermal decomposition) of polystyrene PPS. The amount of modifiers to be used is, preferably, from 7 wt% to 30 wt% or from 7 wt% to 20 wt%, or from 10 wt% to 20 wt%. The remaining part is constituted by elemental sulphur, preferably derived from processes of desulphurization of petroleum and carbon coking, and prepared in Claus furnaces.

The amount of the liquid substance used in a process of sulphur modification, obtained in the process of polystyrene pyrolysis PPS is such that a weight ratio of that substance as referred to other olefin hydrocarbons amounts to at least 1:1, or more preferably to 2:1 or even 3:1.

Unexpectedly, it has been found that replacement of a part of olefin hydrocarbons by the liquid substance obtained from the process of polystyrene pyrolysis PPS results in sulphuric binding agents that have properties comparable to these of other binders. An increase in an amount of substances used resulting from the process of polystyrene pyrolysis in relation to an amount of other modifiers leads to further enhancement of binder properties. Use of that specific type of a modifier makes it also possible to reduce considerably production costs of the binding agent at an increased overall amount of modifiers present in the binder. Of great significance is also a fact that the method according to the invention allows for polystyrene waste management.
for 3 hours, then the temperature was lowered to 130°C during 0.5 hour and maintained for an additional hour.

### Example V

In a heated reactor equipped with a mechanical stirrer, 89 kg of granulated sulphur was melted under nitrogen atmosphere and heated to 125°C, then it was fed with 1 kg of dicyclopentadiene, feeding time being 15 minutes. After 10 minutes, feeding with 7 kg PPS (liquid substance obtained from the process of polystyrene pyrolysis) was started, the feeding time being 20 minutes. Upon placing the modifier in the reaction mass, the reaction temperature was increased to 135°C during 1.5 hour under constant mixing; the reaction mixture was kept in this state for 4 hours, then the temperature was lowered to 125°C during 0.5 hour and maintained for an additional hour. The results are shown in the Table below.

### Example VI

In a heated reactor equipped with a mechanical stirrer, 85.5kg of granulated sulphur was melted under nitrogen atmosphere and heated to 125°C, then it was fed with 1 kg of styrene, feeding time being 10 minutes, and with 3 kg of dicyclopentadiene for the subsequent 15 minutes. After 10 minutes, feeding with 11kg PPS (liquid substance obtained from the process of polystyrene pyrolysis) was started, the feeding time being 20 minutes. Upon placing the modifier in the reaction mass, the reaction temperature was increased to 135°C during 1.5 hours under constant mixing, the reaction mixture was kept in this state for 4 hours, then the temperature was lowered to 125°C during 0.5 hour and maintained for an additional hour. The results are shown in the Table below.

The sulphuric binding agent prepared by this method is subjected to a process of slow cooling, and then it is ground to prepare a granulated product of a size range 2 to 32 mm.

**Results of sulphuric binding agent testing**

| | Volume density [g/cm³] | Bending strength [Mpa] | Compression strength [Mpa] |
|---|---|---|---|
| Example I | 1.893 | 4.57 | 27.35 |
| Example II | 1.838 | 4.12 | 24.05 |
| Example III | 1.848 | 4.16 | 26.6 |
| Example V | 1.852 | 3.89 | 28.0 |
| Example VI | 1.889 | 3.84 | 28.5 |

To produce the sulphur concrete, in a suitably prepared process unit, a mineral aggregate and a suitably selected filler are placed, heated to a temperature from 110°C to 160°C. A mineral frame includes natural or artificial aggregates of various fractions and percentage compositions. To such prepared blend, a liquid polysulphur heated to 105-120°C is added at the amount of 10 wt% -35 wt% referred to the total mass of the sulphur concrete. Duration of concrete mixing is 5 to 180 seconds. A well-mixed sulphur concrete is directly cast into wooden or metal moulds or - by means of a special feeding system - loaded into specially adapted trucks transporting the material to a construction site.

The above-described sulphur concrete may also be prepared in suitably adapted mixers ,also in mobile mixers of small volume up to 3 m³. It consists in placing the mineral aggregate and the filling material heated to 110-160°C in a mixer, and then feeding with a suitable amount of a granulated sulphuric binding agent; the resulting mixture is constantly mixed for at least 30 minutes while heating and then it is cast into wooden or steel moulds or directly into a suitably prepared place on an construction area.

The sulphur concrete of high mechanical strength and resistance to chemical agents of acid- or salt type is obtained.

### Example VII

A mineral aggregate of calcite grit-type at the amount of 72 weight parts and an activated fly ash as a filling material at the amount of 10 weight parts, were heated to 130-140°C, and 18 weight parts of sulphuric binding agent were introduced. The resulting mixture was thoroughly stirred during 150 seconds. The concrete was cast into metal moulds.

Weight absorbability [%] of the resulting concrete was 1.26 and compressive strength amounted to 45.2 MPa.

## Claims

1. Method of preparation of sulphuric binding agent based on sulphur and olefin hydrocarbons, **characterised in that** sulphur at the amount of 70 wt% to 96 wt% is heated under an inert gas atmosphere, and fed with olefin hydrocarbons at the amount of 4 wt% to 30 wt%, and then the reaction mixture is gradually heated to a temperature not higher than 150°C and the temperature is maintained for 3-4 hours under constant mixing, the olefin hydrocarbons include a liquid product derived from polystyrene pyrolysis PPS, which is added at the weight ratio of at least 1:1 referred to the remaining olefin hydrocarbons.

2. Method according to Claim 1, **characterised in that** the liquid product derived from polystyrene pyrolysis PPS is added at the weight ratio 2:1 referred to the remaining olefin hydrocarbons.

3. Method according to Claim 1, **characterised in that** the amount of sulphur in the mixture is from 70 wt% to 93 wt%.

4. Method according to Claim 3, **characterised in that** the amount of sulphur in the mixture is from 80 wt% to 93 wt%.

5. Method according to Claim 1, **characterised in that** the total amount of olefin hydrocarbons is from 7 wt% to 30 wt%.

6. Method according to Claim 5, **characterised in that** the total amount of olefin hydrocarbons added is from 7 wt% to 20 wt%.

7. Method according to Claim 1, **characterised in that** during feeding with olefin hydrocarbons, the temperature is maintained within the limits of 120-130°C.

8. Method according to Claim 1, **characterised in that** feeding with the olefin hydrocarbons takes place during not less than 30 minutes.

9. Method according to Claim 1, **characterised in that** the olefin hydrocarbons added include the liquid product derived from polystyrene pyrolysis PPS at the weight ratio 3:1 referred to the remaining olefin hydrocarbons.

10. Sulphuric binding agent, **characterised in that** it is prepared by the method defined in Claim 1.

11. Sulphur concrete **characterised in that** it includes the sulphuric binding agent defined in Claim 10.

12. Sulphur concrete according to Claim 11, **characterised in that** the amount of the sulphuric binding agent included therein is from 10 wt% to 35 wt%.

13. Sulphur concrete according to Claim 11 **characterised in that** additionally it includes activated fly ash derived from coal combustion in energy boilers, as a filling material.

14. Method of preparation of the sulphur concrete, **characterised in that** the sulphuric binding agent defined in Claim 1 is combined with a mineral aggregate and a filling material, and duration of mixing of these components amounts to 5-180 seconds.

15. Use of the liquid product derived from polystyrene pyrolysis PPS for preparation of the sulphuric binding agent and the sulphur concrete.
